# EUROPÄISCHE PATENTSCHRIFT

(11) **EP 0 659 839 B1**
(45) Veröffentlichungstag und Bekanntmachung des Hinweises auf die Patenterteilung: **26.09.2001**
(21) Anmeldenummer: 94119303.9
(22) Anmeldetag: 07.12.1994
(51) Int. Cl.: C09B 29/036, C09B 43/00

(54) **Verfahren zur Herstellung von Pyrazolazofarbstoffen**
Process for the preparation of pyrazolazo dyestuffs
Procédé de préparation des colorants pyrazolazoiques

(30) Priorität: 20.12.1993 DE 4343454
(43) Veröffentlichungstag der Anmeldung: 28.06.1995
(73) Patentinhaber: BAYER AG, 51368 Leverkusen (DE)
(72) Erfinder: Kerstin, Pape, D-51381 Leverkussen (DE); Berneth, Horst, Dr., D-51373 Leverkusen (DE)

(56) Entgegenhaltungen:
- EP-A- 0 492 444
- EP-A- 0 495 250
- DE-A- 2 539 653
- FR-A- 2 394 587

## Beschreibung

Azofarbstoffe, die 5-Amino-4-cyano-pyrazole als Diazokomponente enthalten, sind bekannt (beispielsweise DE-OS 25 39 653, 27 27 268, US 5 079 213, DDR 231 785). Sie werden in üblicher Weise durch Diazotieren und Kuppeln hergestellt. In 3-Position tragen diese Farbstoffe beispielsweise Wasserstoff, Halogen, Alkyl, Aryl, Alkoxy, Alkoxycarbonyl oder Alkylthio. Amino- oder Acylamino-substituierte Derivate sind nicht bekannt.

Die vorliegende Erfindung betrifft ein Verfahren zur Herstellung von Pyrazolazofarbstoffen der Formel (I) 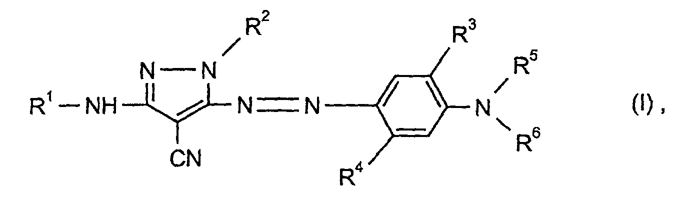 in der
- R¹: Wasserstoff oder einen Acylrest bedeutet,
- R²: Wasserstoff, Alkyl, Alkenyl, Cycloalkyl, Aralkyl, Aryl oder einen gegebenenfalls über Alkylen gebundenen heterocyclischen Rest bedeutet,
- R³: Wasserstoff, Halogen, Alkyl oder Alkoxy bedeutet,
- R⁴: Wasserstoff, Halogen, Hydroxy, Amino, Nitro, Cyano, Alkyl, Alkoxy, Acyl-amino, Acyloxy oder Alkoxycarbonyl bedeutet,
- R⁵ und R⁶: unabhängig voneinander jeweils Wasserstoff, Alkyl, Aralkyl oder Aryl bedeuten oder
- NR⁵R⁶: gemeinsam einen über den Stickstoff gebundenen, hydrierten und gegebenenfalls weitere Heteroatome enthaltenden heterocyclischen Rest bedeutet,
wobei alle vorhandenen Alkyl-, Alkenyl-, Cycloalkyl-, Aralkyl-, Aryl-, Alkoxy- und heterocyclischen Reste gegebenenfalls mit nichtionogenen Substituenten substituiert sein können,
das dadurch gekennzeichnet ist, daß man im Fall, daß R¹ Wasserstoff bedeutet einen kationischen 1,3,4-Thiadiazolfarbstoff der Formel (II) 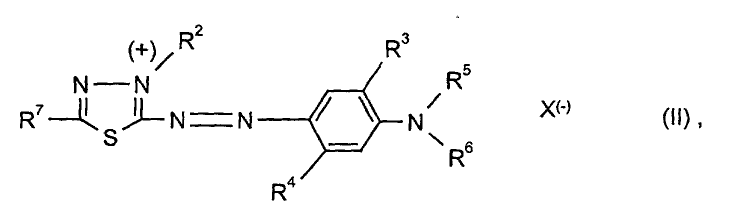 in der
- R², R³, R⁴, R⁵ und R⁶: die bei Formel (I) angegebene Bedeutung haben,
- R⁷: Wasserstoff, Alkyl, Cycloalkyl, Aralkyl, Aryl, einen gegebenenfalls über Alkylen gebundenen heterocyclischen Rest, OR⁸, SR⁸ oder NR⁸R⁹ bedeutet,
- R⁸ und R⁹: unabhängig voneinander Wasserstoff, Alkyl, Alkenyl, Acyl, Cycloalkyl, Aralkyl, Aryl oder einen gegebenenfalls über Alkylen gebundenen heterocyclischen Rest bedeuten oder
- NR⁸R⁹: einen über den Stickstoff gebundenen, vollständig hydrierten und gegebe-nen-falls weitere Heteroatome enthaltenden heterocyclischen Rest bedeutet, und
- X⁻: ein Anion bedeutet,
mit Malondinitril umsetzt, und im Fall, daß R¹ ein Acylrest bedeutet, Pyrazolazofarbstoffe der Formel (I), in der R¹ Wasserstoff bedeutet, mit einem Acylierungsmittel umsetzt.

Nichtionogene Substituenten können beispielsweise in der Farbstoffchemie übliche, nicht dissoziierende Substituenten sein wie Cyano, Hydroxy, Fluor, Chlor, Brom, Nitro, Alkyl, Alkoxy, Phenyl, Acyloxy, Acylamino, Alkoxycarbonyl und Alkoxy-carbonyloxy.

Im Umfang der Bedeutung von R¹ bis R⁶ und der nichtionogenen Substituenten können die folgenden Reste beispielsweise die jeweils angegebene Bedeutung haben:

Acylreste, auch solche in Acyloxy- und Acylamino-Resten, können beispielsweise Alkanoylreste, Benzoylreste, Alkansulfonylreste, Benzolsulfonylreste, Alkoxy-carbonylreste, Mono- oder Dialkylaminocarbonylreste oder Arylaminocarbonylreste sein.

Alkylreste, auch solche in Alkoxy-, Alkanoyl-, Alkansulfonyl-, Alkoxycarbonyl- und Aralkylresten, können beispielsweise geradkettige und verzweigte Reste mit 1 bis 8, vorzugsweise 1 bis 4 C-Atomen sein.

Alkenylreste können beispielsweise solche mit 2 bis 6, vorzugsweise 2 bis 3 C-Atomen sein.

Cycloalkylreste können beispielsweise solche mit 4 bis 7, vorzugsweise 5 bis 6 C-Atomen sein.

Halogen kann beispielsweise Fluor, Chlor oder Brom sein.

Arylreste, auch solche in Aralkylresten, können beispielsweise Phenylreste, die gegebenenfalls durch 1 bis 3 der oben beschriebenen nichtionogenen Substituenten substituiert sein können, sein.

Heterocyclische Reste können beispielsweise Thienyl, Furyl und Pyridyl sowie ihre teilweise oder vollständig hydrierten Derivate sein. Sie können gegebenenfalls 1 bis 3 der oben beschriebenen nichtionogenen Substituenten enthalten.

Bevorzugte nach dem erfindungsgemäßen Verfahren hergestellten Verbindungen der Formel (I) sind solche, bei denen
- R¹: Wasserstoff, C₁- bis C₈-Alkanoyl, C₁- bis C₈-Alkansulfonyl, Benzoyl, Ben-zolsulfonyl, C₁- bis C₈-Alkoxycarbonyl, C₁-bis C₈-Alkylaminocarbonyl oder Phenylaminocarbonyl bedeutet,
wobei außer Wasserstoff alle diese Reste gegebenenfalls mit bis zu 3 gleichen oder verschiedenen Substituenten aus der Gruppe Cyano, Fluor, Chlor, Hydroxy und C₁- bis C₄-Alkoxy substituiert sein können,
- R²: Wasserstoff, C₁- bis C₈-Alkyl, C₂- bis C₄-Alkenyl, C₄- bis C₇-Cycloalkyl, Benzyl, Phenethyl, Phenyl, Furylmethyl, Pyridylmethyl oder Pyridylethyl bedeutet,
wobei Alkylreste gegebenenfalls verzweigt und/oder mit bis zu 3 gleichen oder verschiedenen Substituenten aus der Gruppe Cyano, Fluor, Chlor, Hydroxy, C₁- bis C₄-Alkoxy und C₁- bis C₄-Alkoxycarbonyl substituiert sein können und
wobei Benzyl-, Phenethyl-, Phenyl-, Furfurylmethyl-, Pyridylmethyl- und Pyridylethylreste gegebenenfalls mit bis zu 3 gleichen oder verschiedenen Resten aus der Gruppe Cyano, Chlor, Hydroxy, C₁- bis C₄-Alkyl, C₁- bis C ₄-Alkoxy, Nitro und C₁- bis C₄-Alkoxycarbonyl substituiert sein können,
R³ Wasserstoff, Fluor, Chlor, C₁- bis C₄-Alkyl oder C₁- bis C₄-Alkoxy bedeutet, wobei Alkyl- und Alkoxyreste gegebenenfalls mit bis zu 3 gleichen oder verschiedenen Substituenten aus der Gruppe Fluor, Chlor und Methoxy substituiert sein können,
R⁴ Wasserstoff, Fluor, Chlor, Hydroxy, Amino, Nitro, Cyano, C₁- bis C₄-Alkyl, C₁- bis C₄-Alkoxy, C₁- bis C₄-Alkanoylamino, C₁- bis C₄-Alkanoyloxy, C₁-bis C₄-Alkansulfonylamino, C₁- bis C₄-Alkansulfonyloxy, C₁- bis C₄-Alkoxycarbonylamino, C₁- bis C₄-Alkoxycarbonyloxy, C₁- bis C₄-Dialkyl-aminocarbonylamino, C₁- bis C₄-Dialkylaminocarbonyloxy oder C₁- bis C₄-Alkoxycarbonyl bedeutet,
wobei diese Reste außer Wasserstoff, Fluor, Chlor, Hydroxy, Amino, Nitro und Cyano gegebenenfalls mit bis zu 3 gleichen oder verschiedenen Substituenten aus der Gruppe Fluor und Chlor substituiert sein können und
R⁵ und R⁶ unabhängig voneinander jeweils Wasserstoff, C₁- bis C₈-Alkyl, Benzyl, Phenethyl oder Phenyl bedeuten,
wobei Alkylreste gegebenenfalls verzweigt und/oder mit bis zu 3 gleichen oder verschiedenen Substituenten aus der Gruppe Cyano, Fluor, Chlor, Hydroxy, C₁- bis C₄-Alkoxy, C₁- bis C₄-Alkoxycarbonyl, C₁- bis C₄-Alkanoyloxy und C₁- bis C₄-Alkoxycarbonyloxy substituiert sein können und
wobei Benzyl-, Phenethyl- und Phenylreste gegebenenfalls mit bis zu 3 gleichen oder verschiedenen Substituenten aus der Gruppe Chlor, C₁- bis C₄-Alkyl und C₁- bis C₄-Alkoxy substituiert sein können, oder die Gruppe
NR⁵R⁶ gemeinsam Pyrrolidino, Piperidino, Morpholino, Piperazino, N-C₁- bis C₄-Alkylpiperazino oder Trimethylpyrazolino bedeutet.
Besonders bevorzugte nach dem erfindungsgemäßen Verfahren hergestellte Verbindungen der Formel (I) sind solche, bei denen
- R¹: Wasserstoff, C₁- bis C₄-Alkanoyl, C₁- bis C₄-Alkansulfonyl, Benzoyl, Benzolsulfonyl, C₁- bis C₄-Alkoxycarbonyl, C₁- bis C₄-Alkylaminocarbonyl oder Phenylaminocarbonyl bedeutet,
wobei außer Wasserstoff alle diese Reste gegebenenfalls durch bis zu 3 gleichen oder verschiedenen Substituenten aus der Gruppe Cyano, Fluor, Chlor und Methoxy substituiert sein können,
- R²: Wasserstoff, C₁- bis C₄-Alkyl, Allyl, Cyclopentyl, Cyclohexyl, Benzyl, Phenethyl oder Phenyl bedeutet,
wobei Alkylreste gegebenenfalls mit bis zu 3 gleichen oder verschiedenen Substituenten aus der Gruppe Cyano, Fluor, Chlor, Hydroxy, Methoxy, Ethoxy, Methoxycarbonyl und Ethoxycarbonyl substituiert sein können und wobei Benzyl-, Phenethyl- und Phenylreste gegebenenfalls mit bis zu 3 gleichen oder verschiedenen Substituenten aus der Gruppe Cyano, Chlor, Hydroxy, Methyl, Ethyl, Methoxy, Ethoxy, Nitro, Methoxycarbonyl und Ethoxycarbonyl substituiert sein können,
- R³: Wasserstoff, Fluor, Chlor, Methyl oder Ethyl bedeutet, wobei Methyl und Ethyl gegebenenfalls mit bis zu 3 gleichen oder verschiedenen Substituenten aus der Gruppe Fluor, Chlor und Methoxy substituiert sein können,
- R⁴: Wasserstoff, Fluor, Chlor, Hydroxy, Amino, Nitro, Cyano, Methyl, Ethyl, Methoxy, Ethoxy, Formylamino, Acetylamino, Propionylamino, Acetoxy, Propionyloxy, Methansulfonylamino, Ethansulfonylamino, Methoxycarbonylamino, Ethoxycarbonylamino, Methoxycarbonyloxy, Ethoxycarbonyloxy, Methoxycarbonyl oder Ethoxycarbonyl bedeutet, wobei diese Reste außer Wasserstoff, Fluor, Chlor, Hydroxy, Amino, Nitro, Formylamino und Cyano gegebenenfalls mit bis zu 3 gleichen oder verschiedenen Substituenten aus der Gruppe Fluor und Chlor substituiert sein können,
- R⁵ und R⁶: unabhängig voneinander jeweils Wasserstoff, C₁- bis C₄-Alkyl, Benzyl, Phenethyl oder Phenyl bedeuten,
wobei Alkylreste gegebenenfalls mit bis zu 3 gleichen oder verschiedenen Substituenten aus der Gruppe Cyano, Fluor, Chlor, Hydroxy, Methoxy, Ethoxy, Methoxycarbonyl, Ethoxycarbonyl, Acetoxy und Propionyloxy substituiert sein können und
wobei Benzyl-, Phenethyl- und Phenylreste gegebenenfalls mit bis zu 3 gleichen oder verschiedenen Substituenten aus der Gruppe Chlor, Methyl und Methoxy substituiert sein können oder die Gruppe
- NR⁵R⁶: gemeinsam Pyrrolidino, Piperidino, Morpholino, Piperazino, N-Methylpiperazino oder Trimethylpyrazolino bedeutet.
Ganz besonders bevorzugte nach dem erfindungsgemäßen Verfahren hergestellte Verbindungen der Formel (I) sind solche, bei denen
- R¹: Wasserstoff, Acetyl, Propionyl, Methansulfonyl, Ethansulfonyl, Methoxycarbonyl, Ethoxycarbonyl oder Methylaminocarbonyl bedeutet,
- R²: Methyl, Ethyl, Propyl, Butyl, Cyanethyl, Chlorethyl, Hydroxyethyl, Hydroxypropyl, Methoxyethyl, Ethoxyethyl, Methoxycarbonylethyl, Allyl, Cyclohexyl, Benzyl, Phenethyl, Phenyl, Tolyl oder Chlorphenyl bedeutet,
- R³: Wasserstoff, Chlor oder Methyl bedeutet,
- R⁴: Wasserstoff, Fluor, Chlor, Hydroxy, Amino, Methyl, Ethyl, Trifluormethyl, Formylamino, Acetylamino, Trifluoracetylamino, Propionylamino, Acetoxy, Methansulfonylamino, Methoxycarbonylamino, Ethoxycarbonylamino, Methoxycarbonyl oder Ethoxycarbonyl bedeutet und
- R⁵ und R⁶: unabhängig voneinander jeweils Methyl, Ethyl, Propyl, Butyl, Chlorethyl, Hydroxyethyl, Cyanethyl, Methoxyethyl, Methoxycarbonylethyl, Acetoxyethyl, Propionyloxyethyl, Methoxycarbonyloxyethyl, Ethoxycarbonyloxyethyl, Benzyl, Phenyl, Tolyl oder Chlorphenyl bedeuten.

In eine besonders herausgehobene Ausführungsform des erfindungsgemäßen Verfahrens seien Verbindungen der Formel (I) genannt, bei denen
- R¹: Wasserstoff, Formyl, Acetyl, Trifluoracetyl, Propionyl, Methansulfonyl, Ethansulfonyl, Methoxycarbonyl oder Ethoxycarbonyl bedeutet,
- R²: Methyl, Ethyl, Propyl, Cyanethyl oder Benzyl bedeutet,
- R³: Wasserstoff oder Methyl bedeutet,
- R⁴: Acetamino, Propionylamino, Methansulfonylamino oder Methoxycarbonylamino bedeutet und
- R⁵ und R⁶: unabhängig voneinander jeweils Methyl, Ethyl, Propyl, Cyanethyl, Methoxyethyl, Methoxycarbonylethyl oder Acetoxyethyl bedeuten.
- X⁻: kann ein organisches oder anorganisches Anion sein, beispielsweise Chlorid, Bromid, Methylsulfat, Ethylsulfat, Methansulfonat, Benzolsulfonat, Acetat oder Sulfat. Wenn es sich um mehrwertige Anionen wie beispielsweise Sulfat handelt, dann steht in Formel (II) X⁻ für ein Äquivalent solch eines mehrwertigen Anions.

Die als Ausgangsprodukte benötigten kationischen 1,3,4-Thiadiazolfarbstoffe der Formel (II) sind beispielsweise aus der FR 1 199 411, der DE-OS 2 811 258 und der EP-OS 0 495 250 bekannt oder lassen sich analog dazu herstelle.

Die Umsetzung der Farbstoffe der Formel (II) mit Malondinitril zu den erfindungsgemäßen Pyrazolazofarbstoffen mit R¹ = Wasserstoff kann beispielsweise in Gegenwart eines Lösungsmittels und in Gegenwart einer Base bei Temperaturen zwischen 0°C und dem Siedepunkt des Mediums durchgeführt werden. Bevorzugte Reaktionstemperaturen sind solche zwischen 15 und 40°C. In der Regel ist die Reaktion nach kurzer Zeit, z.B. höchstens 5 Stunden, beendet.

Als Lösungsmittel kommen beispielsweise Alkohole wie Methanol, Ethanol oder Isopropanol, Ketone wie Aceton oder Butanon, Ester wie Essigsäureethyl- oder -butylester, chlorierte Kohlenwasserstoffe wie Chloroform oder 1,2-Dichlorethan, aromatische Kohlenwasserstoffe wie Toluol oder Xylol, chlorierte aromatische Kohlenwasserstoffe wie Chlorbenzol und dipolare aprotische Lösungsmittel wie Dimethylformamid, Dimethylsulfoxid, N-Methylpyrrolidon, Butyrolacton oder Acetonitril oder Mischungen davon in Frage.

Als Basen kommen beispielsweise Alkali- oder Erdalkalioxide sowie Alkali- oder Erdalkalihydroxide in Frage wie Natriumhydroxid, Kaliumhydroxid, Calciumoxid, aber auch Alkali- oder Erdalkalicarbonate wie Natrium-, Kalium- oder Calciumcarbonat, sowie Alkali- oder Erdalkalialkoholate wie Natriummethylat oder Kaliumtert.-butylat sowie Amine wie Triethylamin, Triethanolamin, Pyridin, 4-Dimethylaminopyridin, Azabicyclononen und Azabicycloundecen.

Bevorzugt ist die Verwendung von Alkoholen als Lösungsmittel und von Alkali- oder Erdalkalialkoholaten als Base. Besonders bevorzugt sind Methanol und Natriummethylat.

In der Regel, insbesondere bei der Verwendung von Alkoholen als Lösungsmittel, fallen die Pyrazolazofarbstoffe der Formel (I) mit R¹ = Wasserstoff aus dem Reaktionsmedium aus und können z.B. durch Abfiltrieren isoliert werden. Eventuell mitgefällte Nebenprodukte können beispielsweise durch Umkristallisation oder die Anwendung chromatographischer Methoden abgetrennt werden.

Die Umsetzung von Pyrazolazofarbstoffen der Formel (I) mit R¹ = Wasserstoff zu Pyrazolazofarbstoffen der Formel (I) mit R¹ = Acyl kann beispielsweise mit einem Acylierungsmittel in Gegenwart eines Lösungsmittels und eventuell in Gegenwart einer Base bei Temperaturen zwischen Raumtemperatur und dem Siedepunkt des Mediums durchgeführt werden. Die bevorzugte Reaktionstemperatur liegt im Bereich 30 bis 80°C. Die Umsetzung ist in der Regel nach höchstens 8 Stunden beendet.

Als Lösungsmittel für diese Umsetzung kommen beispielsweise die dem Acylierungsmittel zugrunde liegende Carbonsäure wie Ameisensäure, Essigsäure oder Propionsäure oder die oben aufgeführten Ketone, Ester, chlorierten Kohlenwasserstoffe, aromatischen Kohlenwasserstoffe, chlorierten aromatischen Kohlenwasserstoffe und die polaren aprotischen Lösungsmittel in Frage. Ameisensäure verwendet man zweckmäßigerweise nur dann als Lösungsmittel, wenn man Formylieren will.

Als Acylierungsmittel kommen beispielsweise Carbonsäuren wie Ameisensäure, Carbonsäureanhydride wie Acetanhydrid, Propionsäureanhydrid, Trifluoressig-säureanhydrid oder Benzanhydrid, Carbonsäurehalogenide wie Acetylchlorid, Propionsäurechlorid, Benzoylchlorid, Chlorameisensäuremethylester und Chlorameisensäureethylester, Sulfonsäurehalogenide wie Methansulfonsäurechlorid, Nonafluorbutansulfonsäurechlorid oder 4-Methylbenzolsulfonsäurechlorid sowie Isocyanate wie Methylisocyanat, Ethylisocyanat, Butylisocyanat oder Phenylisocyanat in Frage.

Der Einsatz von Basen ist im allgemeinen dann vorteilhaft, wenn als Acylierungsmittel Säurehalogenide verwendet werden. Als Basen kommen beispielsweise Alkali- und Erdalkalicarbonate, Alkali- und Erdalkalihydrogencarbonate wie Natriumcarbonat, Natriumhydrogencarbonat, Kaliumcarbonat und Calciumcarbonat, Amine wie Triethylamin, Triisopropylamin und Pyridin sowie Diazabicyclononen und Diazabicycloundecen in Frage.

Bevorzugte Lösungsmittel sind Carbonsäuren und chlorierte aromatische Kohlenwasserstoffe.

Bevorzugte Acylierungsmittel sind Carbonsäureanhydride und Chlorameisensäureester.

Bevorzugte Basen sind Natriumcarbonat und Triisopropylamin.

Die auf diese Weise hergestellten acylgruppenhaltigen Farbstoffe der Formel (I) fallen entweder aus dem Reaktionsmedium aus oder man trägt das Reaktionsgemisch nach beendeter Reaktion auf Wasser aus und isoliert die dann ausfallenden Farbstoffe oder destilliert das Lösungsmittel ab.

### Beispiele

### Beispiel 1

5,36 g des Farbstoffs der Formel (II) mit R² = Methyl, R³ = Wasserstoff, R⁴ = Acetamino, R⁵ = R⁶ = Ethyl, R⁷ = R⁸ = Isopropyl und X⁻ = 1/2 ZnCl₄⁻ wurden in 40 ml Methanol gelöst. Bei Raumtemperatur wurden 0,72 g Malondinitril und 5,2 ml 30 %ige methanolische Natriummethylatlösung zugesetzt. Es wurde 2 Stunden bei Raumtemperatur gerührt, abgesaugt und mit Methanol und Wasser gewaschen. Nach dem Trocknen im Vakuum erhielt man 2,05 g des Farbstoffs der Formel (I) mit R¹ = Wasserstoff und R² bis R⁶ in der oben angegebenen Bedeutung.
Schmelzpunkt: 225-227°C
ν_{CN}=2211 cm⁻¹
λₘₐₓ (DMF) = 526,5 nm

Der Farbstoff färbte Polyester in einem leuchtenden, lichtechten, leicht blaustichigen Rot.

### Beispiel 2

1,77 g des Farbstoffs aus Beispiel 1 wurden in 30 ml Eisessig bei 50°C teilweise gelöst. 0,76 g Acetanhydrid wurden zugesetzt, 4 Stunden bei dieser Temperatur gerührt und dann abgekühlt. Der Farbstoff wurde abgesaugt, mit wenig Eisessig gewaschen und im Vakuum getrocknet. Man erhielt 1,65 g des Farbstoffs der Formel (I) mit R¹ = Acetyl und R² bis R⁶ in der in Beispiel 1 angegebenen Bedeutung.
Schmelzpunkt: 238-240°C
λₘₐₓ (DMF) = 530,5 nm

Der Farbstoff färbte Polyester in einem leuchtenden, lichtechten Rot.

### Beispiel 3

5,04 g des Farbstoffs der Formel (II) mit R² = Methyl, R³ = R⁷ = Wasserstoff, R⁴ = Acetamino, R⁵ = R⁶ = Ethyl und X⁻ = ZnCl₃⁻ wurden wie in Beispiel 1 beschrieben umgesetzt Es wurden 1,6 g des auch gemäß Beispiel 1 erhaltenen Farbstoffs erhalten.

### Beispiele 4 bis 37

Analog zu den Beispielen 1 und 2 wurden folgende Farbstoffe der Formel (I) hergestellt:

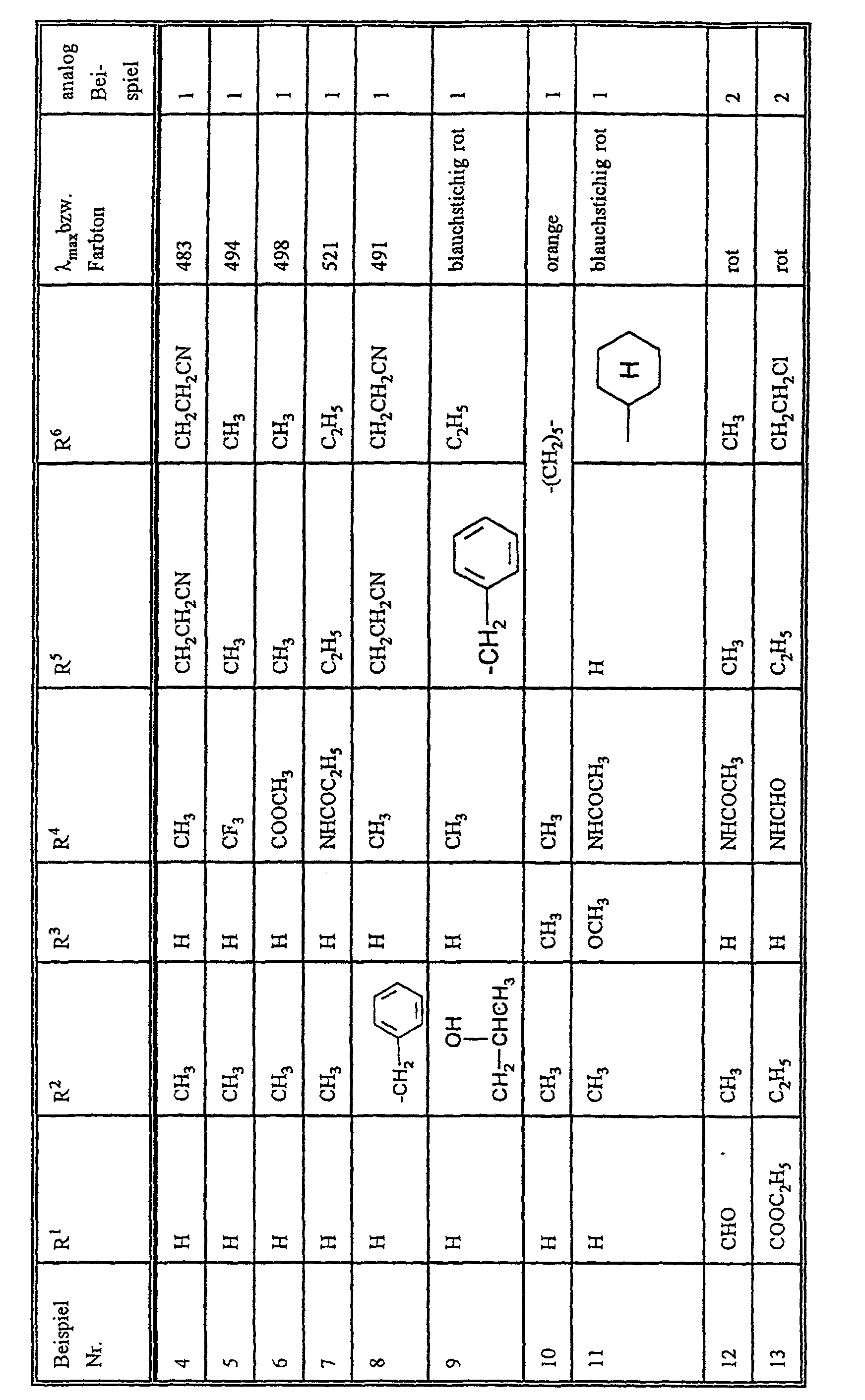

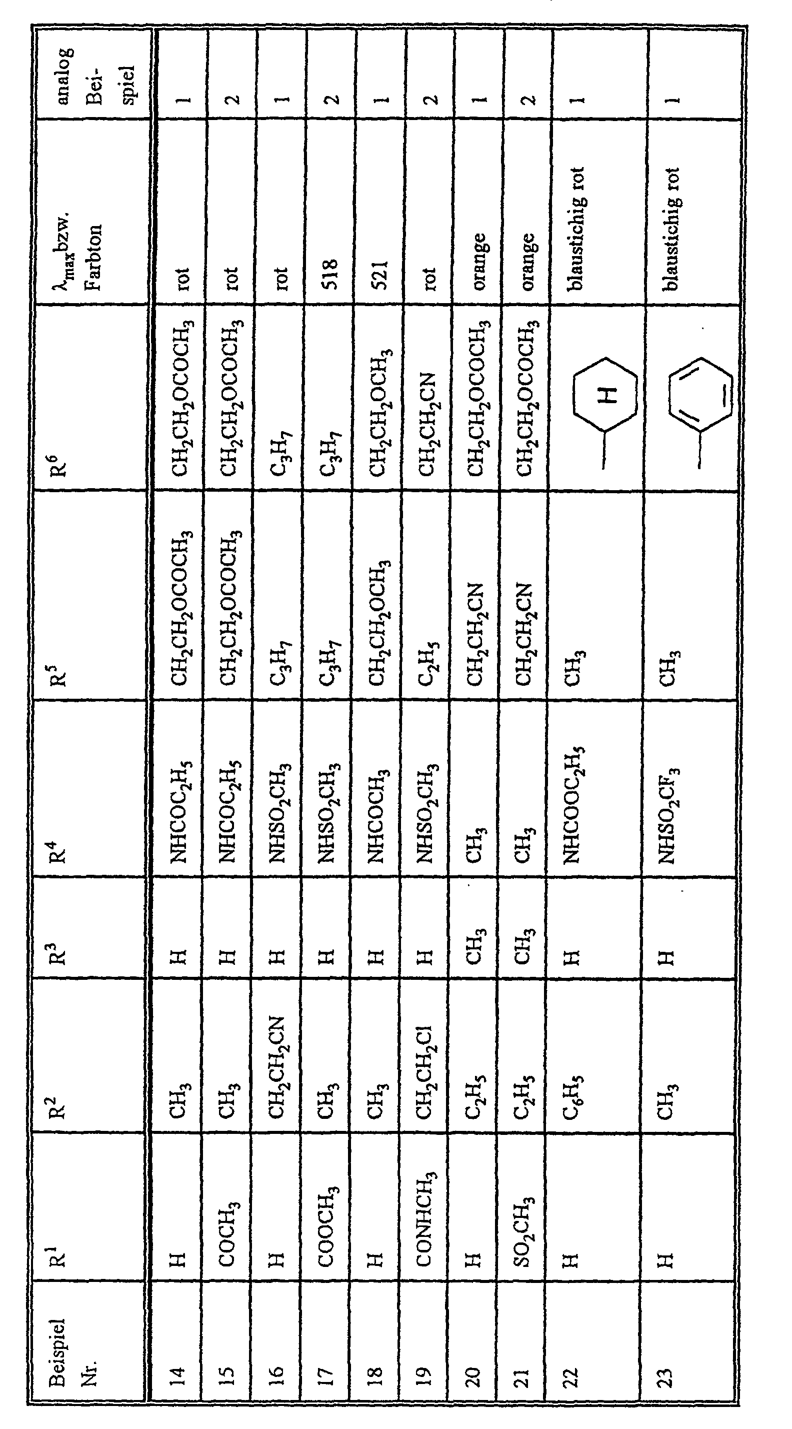

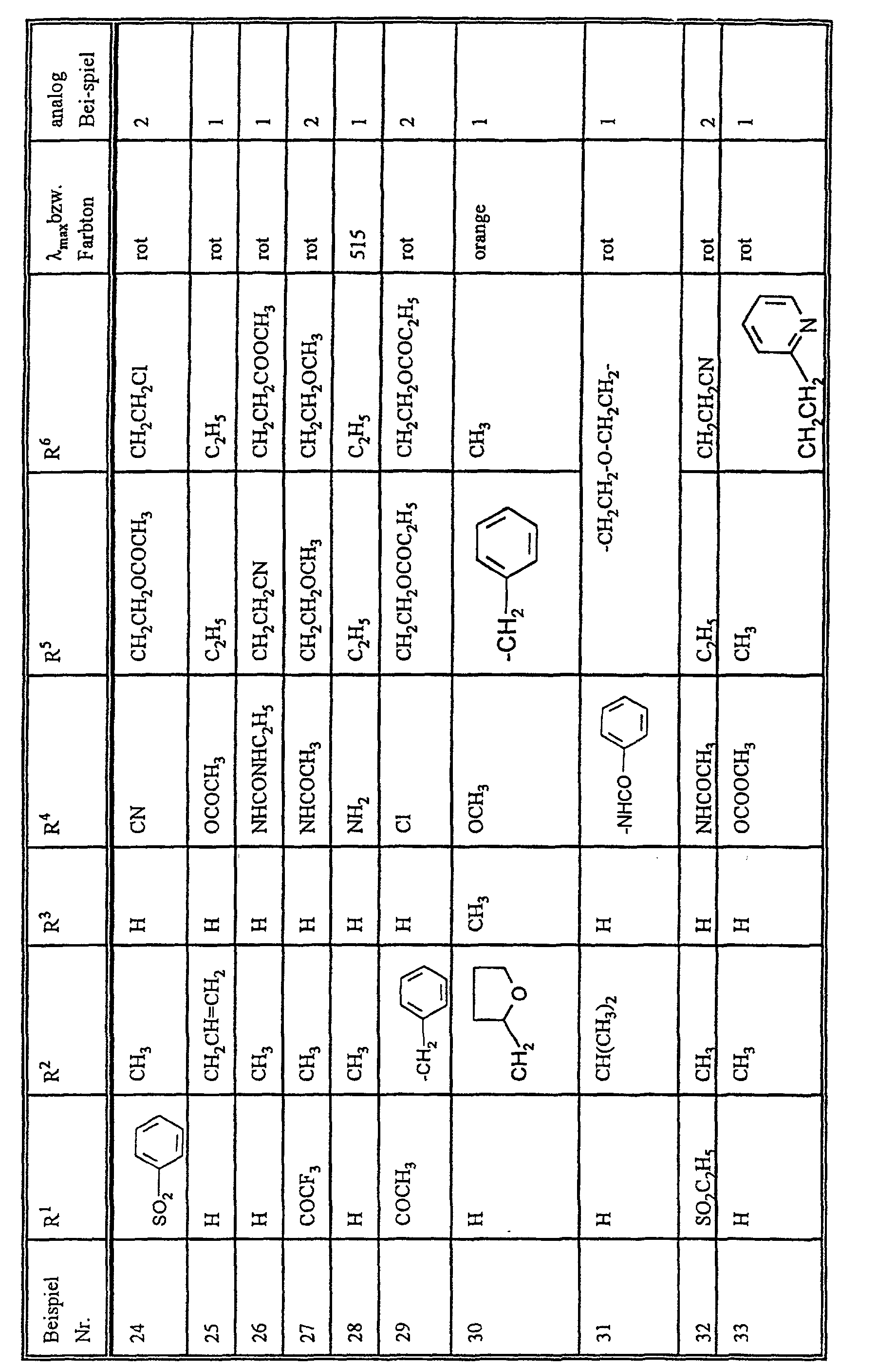

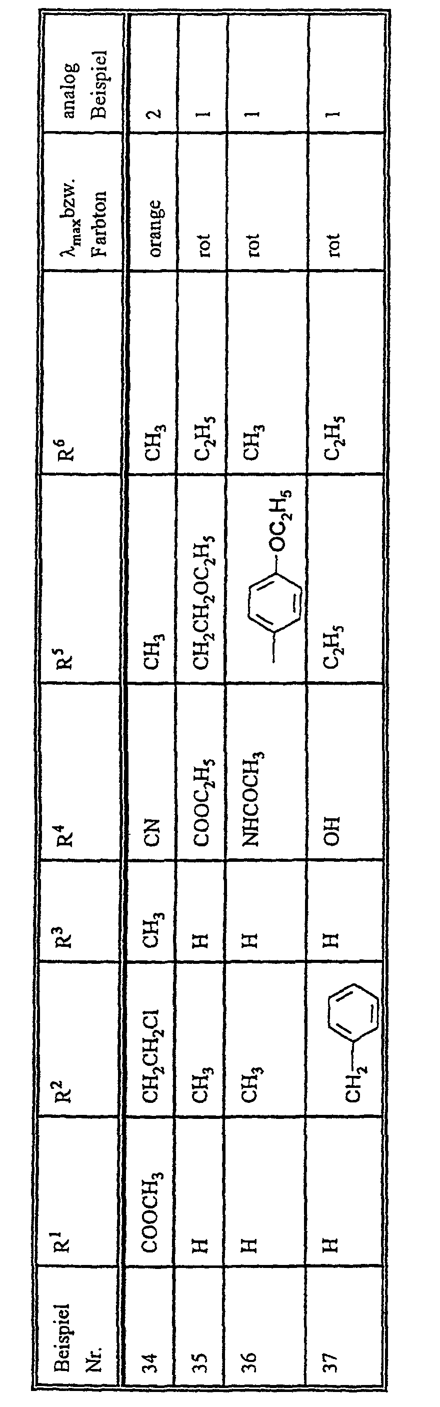

### Beispiel 38 (Färbung von Polyester)

0,4 g des gemäß Beispiel 1 hergestellten Farbstoffs wurden in fein dispergierter Form in 2 000 ml Wasser eingerührt. Es wurde mit 4 g eines handelsüblichen Dispergiermittels auf Basis eines Naphthalinsulfonsäure-Formaldehyd-Kondensats und 2 g Natriumdihydrogenphosphat versetzt und mit Essigsäure ein pH = 4,5 eingestellt. In die so erhaltene Dispersion wurden 100 g eines Polyestergewebes auf Basis Polyethylenglykolterephthalat eingebracht. Dann wurde 45 min bei 130°C gefärbt, gespült, mit einer 0,2 gew.-%igen Natriumdithionitlösung während 15 min bei 70-80°C reduktiv nachbehandelt, erneut gespült und getrocknet. Das Polyestergewebe war leuchtend, leicht blaustichig rot gefärbt und besaß gute coloristische Echtheiten.

Ähnliche Färbungen in orangen bis blaustichig roten Nuancen wurden erhalten bei Färbungen mit den Farbstoffen hergestellt nach den Beispielen 2 bis 37.

### Beispiel 39 (Diffusionstransferdruck)

Das Farbgeberelement wurde folgendermaßen hergestellt:
Eine 0,5 gew.-%ige Lösung des Farbstoffs hergestellt gemäß Beispiel 5 und eine 0,5 gew.-%ige Lösung eines Binders auf Basis Styrol/Acrylnitril-Copolymerisat in Tetrahydrofuran wurden mit einer Schichtdicke von 100 µm im feuchten Zustand auf einen 5 µm dünnen Polyethylenterephthalat-Film aufgetragen, der vorher mit einer Schicht aus Vinylidenchlorid/Acrylnitril-Copolymerisat (2,5 µm Stärke im trockenen Zustand) versehen worden war. Die gebildete Schicht wurde im Vakuum getrocknet. Die Rückseite des Polyethylenterephthalat-Filmes wurde mit einer Lösung beschichtet, die 5 Gew.-% Styrol/Acrylnitril-Copolymer und 0,1 Gew.-% einer 1 gew.-%igen Lösung eines Polysiloxan/Polyether-Copolymer (Tegoglide® 410 der Fa. Th. Goldschmidt) enthielt. Diese Lösung wurde in einer Dicke von 100 µm aufgetragen und diente zur Verhinderung des Anklebens des Farbgeberelements an den Thermodruckkopf. Das so erhaltene Farbstoffgeberelement wurde in einem Hitachi color printer VY-100 A zum Drucken auf im Handel erhältliches Aufzeichnungsmaterial (Hitachi VY-S 100 A paper ink set) eingesetzt.

Es wurde eine intensive orange Aufzeichnung erhalten.

Analoge Druckergebnisse mit orangen bis blaustichig roten Aufzeichnungen wurden beim Einsatz entsprechender Farbgeberelemente erhalten, welche die Farbstoffe hergestellt gemäß den Beispielen 1 bis 4 und 6 bis 37 enthielten.

## Patentansprüche

1. Verfahren zur Herstellung von Pyrazolazofarbstoffen der Formel (I) 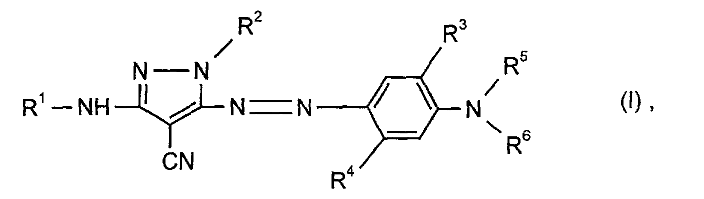 in der
R¹ Wasserstoff oder einen Acylrest bedeutet,
R² Wasserstoff, Alkyl, Alkenyl, Cycloalkyl, Aralkyl, Aryl oder einen gegebenenfalls über Alkylen gebundenen heterocyclischen Rest bedeutet,
R³ Wasserstoff, Halogen, Alkyl oder Alkoxy bedeutet,
R⁴ Wasserstoff, Halogen, Hydroxy, Amino, Nitro, Cyano, Alkyl, Alkoxy, Acylamino, Acyloxy oder Alkoxycarbonyl bedeutet,
R⁵ und R⁶ unabhängig voneinander jeweils Wasserstoff, Alkyl, Aralkyl oder Aryl bedeuten oder
NR⁵R⁶ gemeinsam einen über den Stickstoff gebundenen, hydrierten und gegebenenfalls weitere Heteroatome enthaltenden heterocyclischen Rest
bedeutet, **dadurch gekennzeichnet, daß** man einen kationischen 1,3,4-Thiadiazolfarbstoff der Formel (II) 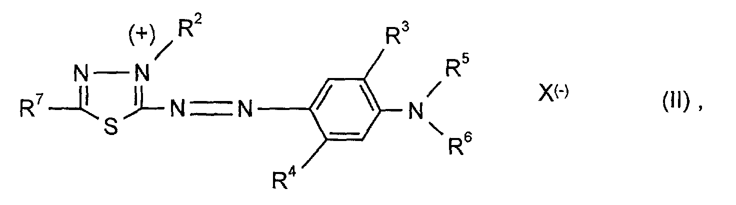 in der
R², R³, R⁴, R⁵ und R⁶ die oben angegebene Bedeutung haben,
R⁷ Wasserstoff, Alkyl, Cycloalkyl, Aralkyl, Aryl, einen gegebenenfalls über Alkylen gebundenen heterocyclischen Rest, OR⁸, SR⁸ oder NR⁸R⁹ bedeutet,
R⁸ und R⁹ unabhängig voneinander Wasserstoff, Alkyl, Alkenyl, Acyl, Cycloalkyl, Aralkyl, Aryl oder einen gegebenenfalls über Alkylen gebundenen heterocyclischen Rest bedeuten oder
NR⁸R⁹ einen über den Stickstoff gebundenen, vollständig hydrierten und gegebenenfalls weitere Heteroatome enthaltenden heterocyclischen Rest bedeutet, und
X⁻ ein Anion bedeutet,
mit Malondinitril umsetzt, und, daß man für den Fall, daß R¹ einen Acylrest bedeutet, den gebildeten Pyrazolazofarbstoff der Formel (I) mit R¹ = Wasserstoff mit einem Acylierungsmittel umsetzt.

2. Verfahren zur Herstellung von Pyrazolazofarbstoffen nach Anspruch 1, **dadurch gekennzeichnet, daß** in Formel (I)
R¹ Wasserstoff, C₁- bis C₈-Alkanoyl, C₁- bis C₈-Alkansulfonyl, Benzoyl, Benzolsulfonyl, C₁- bis C₈-Alkoxycarbonyl, C₁-bis C₈-Alkylaminocarbonyl oder Phenylaminocarbonyl bedeutet,
wobei außer Wasserstoff alle diese Reste gegebenenfalls mit bis zu 3 gleichen oder verschiedenen Substituenten aus der Gruppe Cyano, Fluor, Chlor, Hydroxy und C₁- bis C₄-Alkoxy substituiert sein können,
R² Wasserstoff, C₁- bis C₈-Alkyl, C₂- bis C₄-Alkenyl, C₄- bis C₇-Cyclo-alkyl, Benzyl, Phenethyl, Phenyl, Furylmethyl, Pyridylmethyl oder Pyridylethyl bedeutet,
wobei Alkylreste gegebenenfalls verzweigt und/oder mit bis zu 3 gleichen oder verschiedenen Substituenten aus der Gruppe Cyano, Fluor, Chlor, Hydroxy, C₁- bis C₄-Alkoxy und C₁- bis C₄-Alkoxy-carbonyl substituiert sein können und
wobei Benzyl-, Phenethyl-, Phenyl-, Furfurylmethyl-, Pyridylmethyl- und Pyridylethylreste gegebenenfalls mit bis zu 3 gleichen oder verschiedenen Resten aus der Gruppe Cyano, Chlor, Hydroxy, C₁- bis C₄-Alkyl, C₁- bis C₄-Alkoxy, Nitro und C₁- bis C₄-Alkoxycarbonyl substituiert sein können,
R³ Wasserstoff, Fluor, Chlor, C₁- bis C₄-Alkyl oder C₁- bis C₄-Alkoxy bedeutet,
wobei Alkyl- und Alkoxyreste gegebenenfalls mit bis zu 3 gleichen oder verschiedenen Substituenten aus der Gruppe Fluor, Chlor und Methoxy substituiert sein können,
R⁴ Wasserstoff, Fluor, Chlor, Hydroxy, Amino, Nitro, Cyano, C₁- bis C₄-Alkyl, C₁- bis C₄-Alkoxy, C₁- bis C₄-Alkanoylamino, C₁- bis C₄-Alkanoyloxy, C₁- bis C₄-Alkansulfonylamino, C₁- bis C₄-Alkansulfonyloxy, C₁- bis C₄-Alkoxycarbonylamino, C₁- bis C₄-Alkoxy-carbonyloxy, C₁- bis C₄-Dialkylaminocarbonylamino, C₁- bis C₄-Dialkylaminocarbonyloxy oder C₁- bis C₄-Alkoxycarbonyl bedeutet, wobei diese Reste außer Wasserstoff, Fluor, Chlor, Hydroxy, Amino, Nitro und Cyano gegebenenfalls mit bis zu 3 gleichen oder verschiedenen Substituenten aus der Gruppe Fluor und Chlor substituiert sein können und
R⁵ und R⁶ unabhängig voneinander jeweils Wasserstoff, C₁- bis C₈-Alkyl, Benzyl, Phenethyl oder Phenyl bedeuten,
wobei Alkylreste gegebenenfalls verzweigt und/oder mit bis zu 3 gleichen oder verschiedenen Substituenten aus der Gruppe Cyano, Fluor, Chlor, Hydroxy, C₁- bis C₄-Alkoxy, C₁- bis C₄-Alkoxycarbonyl, C₁- bis C₄-Alkanoyloxy und C₁- bis C₄-Alkoxycarbonyloxy substituiert sein können und
wobei Benzyl-, Phenethyl- und Phenylreste gegebenenfalls mit bis zu 3 gleichen oder verschiedenen Substituenten aus der Gruppe Chlor, C₁-bis C₄-Alkyl und C₁- bis C₄-Alkoxy substituiert sein können, oder die Gruppe
NR⁵R⁶ gemeinsam Pyrrolidino, Piperidino, Morpholino, Piperazino, N-C₁- bis C₄-Alkylpiperazino oder Trimethylpyrazolino bedeutet.

3. Verfahren zur Herstellung von Pyrazolazofarbstoffen nach Ansprüchen 1 bis 2,
**dadurch gekennzeichnet, daß** in Formel (I)
R¹ Wasserstoff, C₁- bis C₄-Alkanoyl, C₁- bis C₄-Alkansulfonyl, Benzoyl, Benzolsulfonyl, C₁- bis C₄-Alkoxycarbonyl, C₁- bis C₄-Alkylamino-carbonyl oder Phenylaminocarbonyl bedeutet,
wobei außer Wasserstoff alle diese Reste gegebenenfalls mit bis zu 3 gleichen oder verschiedenen Substituenten aus der Gruppe Cyano, Fluor, Chlor und Methoxy substituiert sein können,
R² Wasserstoff, C₁- bis C₄-Alkyl, Allyl, Cyclopentyl, Cyclohexyl, Benzyl, Phenethyl oder Phenyl bedeutet,
wobei Alkylreste gegebenenfalls mit bis zu 3 gleichen oder verschiedenen Substituenten aus der Gruppe Cyano, Fluor, Chlor, Hydroxy, Methoxy, Ethoxy, Methoxycarbonyl und Ethoxycarbonyl substituiert sein können und
wobei Benzyl-, Phenethyl- und Phenylreste gegebenenfalls mit bis zu 3 gleichen oder verschiedenen Substituenten aus der Gruppe Cyano, Chlor, Hydroxy, Methyl, Ethyl, Methoxy, Ethoxy, Nitro, Methoxycarbonyl und Ethoxycarbonyl substituiert sein können,
R³ Wasserstoff, Fluor, Chlor, Methyl oder Ethyl bedeutet,
wobei Methyl und Ethyl gegebenenfalls mit bis zu 3 gleichen oder verschiedenen Substituenten aus der Gruppe Fluor, Chlor und Methoxy substituiert sein können,
R⁴ Wasserstoff, Fluor, Chlor, Hydroxy, Amino, Nitro, Cyano, Methyl, Ethyl, Methoxy, Ethoxy, Formylamino, Acetylamino, Propionylamino, Acetoxy, Propionyloxy, Methansulfonylamino, Ethansulfonylamino, Methoxycarbonylamino, Ethoxycarbonylamino, Methoxycarbonyloxy, Ethoxycarbonyloxy, Methoxycarbonyl oder Ethoxycarbonyl bedeutet,
wobei diese Reste außer Wasserstoff, Fluor, Chlor, Hydroxy, Amino, Nitro, Formylamino und Cyano gegebenenfalls mit bis zu 3 gleichen oder verschiedenen Substituenten aus der Gruppe Fluor und Chlor substituiert sein können,
R⁵ und R⁶ unabhängig voneinander jeweils Wasserstoff, C₁- bis C₄-Alkyl, Benzyl, Phenethyl oder Phenyl bedeuten,
wobei Alkylreste gegebenenfalls mit bis zu 3 gleichen oder verschiedenen Substituenten aus der Gruppe Cyano, Fluor, Chlor, Hydroxy, Methoxy, Ethoxy, Methoxycarbonyl, Ethoxycarbonyl, Acetoxy und Propionyloxy substituiert sein können und
wobei Benzyl-, Phenethyl- und Phenylreste gegebenenfalls mit bis zu 3 gleichen oder verschiedenen Substituenten aus der Gruppe Chlor, Methyl und Methoxy substituiert sein können oder die Gruppe
NR⁵R⁶ gemeinsam Pyrrolidino, Piperidino, Morpholino, Piperazino, N-Methyl-piperazino oder Trimethylpyrazolino bedeutet.

4. Verfahren zur Herstellung von Pyrazolazofarbstoffen nach Ansprüchen 1 bis 3,
**dadurch gekennzeichnet, daß** in Formel (I)
R¹ Wasserstoff, Acetyl, Propionyl, Methansulfonyl, Ethansulfonyl, Methoxycarbonyl, Ethoxycarbonyl oder Methylaminocarbonyl bedeutet,
R² Methyl, Ethyl, Propyl, Butyl, Cyanethyl, Chlorethyl, Hydroxyethyl, Hydroxypropyl, Methoxyethyl, Ethoxyethyl, Methoxycarbonylethyl, Allyl, Cyclohexyl, Benzyl, Phenethyl, Phenyl, Tolyl oder Chlorphenyl bedeutet,
R³ Wasserstoff, Chlor oder Methyl bedeutet,
R⁴ Wasserstoff, Fluor, Chlor, Hydroxy, Amino, Methyl, Ethyl, Trifluormethyl, Formylamino, Acetylamino, Trifluoracetylamino, Propionylamino, Acetoxy, Methansulfonylamino, Methoxycarbonylamino, Ethoxycarbonylamino, Methoxycarbonyl oder Ethoxycarbonyl bedeutet und
R⁵ und R⁶ unabhängig voneinander jeweils Methyl, Ethyl, Propyl, Butyl, Chlorethyl, Hydroxyethyl, Cyanethyl, Methoxyethyl, Methoxycarbonylethyl, Acetoxyethyl, Propionyloxyethyl, Methoxycarbonyl-oxyethyl, Ethoxycarbonyloxyethyl, Benzyl, Phenyl, Tolyl oder Chlorphenyl bedeuten.

5. Verfahren zur Herstellung von Pyrazolazofarbstoffen nach Ansprüchen 1 bis 4,
**dadurch gekennzeichnet, daß** in Formel (I)
R¹ Wasserstoff, Formyl, Acetyl, Trifluoracetyl, Propionyl, Methansulfonyl, Ethansulfonyl, Methoxycarbonyl oder Ethoxycarbonyl bedeutet,
R² Methyl, Ethyl, Propyl, Cyanethyl oder Benzyl bedeutet,
R³ Wasserstoff oder Methyl bedeutet,
R⁴ Acetamino, Propionylamino, Methansulfonylamino oder Methoxy-carbonylamino bedeutet und
R⁵ und R⁶ unabhängig voneinander jeweils Methyl, Ethyl, Propyl, Cyanethyl, Methoxyethyl, Methoxycarbonylethyl oder Acetoxyethyl bedeuten.

## Claims

1. Process for the preparation of pyrazole azo dyestuffs of the formula (I) 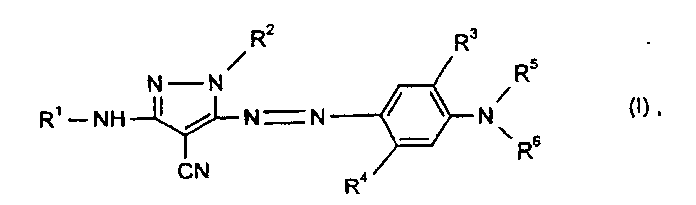 in which
R¹ denotes hydrogen or an acyl radical,
R² denotes hydrogen, alkyl, alkenyl, cycloalkyl, aralkyl, aryl or a heterocyclic radical which is optionally bonded via alkylene,
R³ denotes hydrogen, halogen, alkyl or alkoxy,
R⁴ denotes hydrogen, halogen, hydroxyl, amino, nitro, cyano, alkyl, alkoxy, acylamino, acyloxy or alkoxycarbonyl,
R⁵ and R⁶ independently of one another in each case denote hydrogen, alkyl, aralkyl or aryl or
NR⁵R⁶ together denotes a hydrogenated heterocyclic radical which is bonded via the nitrogen and optionally contains further hetero atoms,
**characterized in that** a cationic 1,3,4-thiadiazole dyestuff of the formula (II) 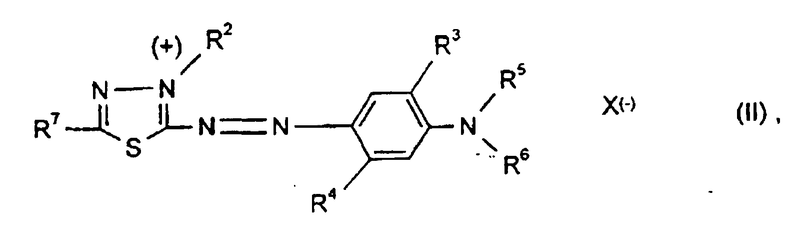 in which
R², R³, R⁴, R⁵ and R⁶ have the meaning given above,
R⁷ denotes hydrogen, alkyl, cycloalkyl, aralkyl, aryl, a heterocyclic radical which is optionally bonded via alkylene, OR⁸, SR⁸ or NR⁸R⁹,
R⁸ and R⁹ independently of one another denote hydrogen, alkyl, alkenyl, acyl, cycloalkyl, aralkyl, aryl or a heterocyclic radical which is optionally bonded via alkylene or
NR⁸R⁹ denotes a completely hydrogenated heterocyclic radical which is bonded via the nitrogen and optionally contains further heteroatoms and
X⁻ denotes an anion,
is reacted with malonitrile, and in the case that R¹ denotes an acyl radical, the resulting pyrazole azo dyestuff of the formula (I) where R¹ = hydrogen is reacted with an acylating agent.

2. Process for the preparation of pyrazole azo dyestuffs according to Claim 1, **characterized in that**, in formula (I),
R¹ denotes hydrogen, C₁- to C₈-alkanoyl, C₁- to C₈-alkanesulphonyl, benzoyl, benzenesulphonyl, C₁-to C₈-alkoxycarbonyl, C₁- to C₈-alkylaminocarbonyl or phenylaminocarbonyl,
it being possible for all these radicals, apart from hydrogen, to be optionally substituted by up to 3 identical or different substituents from the group consisting of cyano, fluorine, chlorine, hydroxyl and C₁- to C₄-alkoxy,
R² denotes hydrogen, C₁- to C₈-alkyl, C₂- to C₄-alkenyl, C₄- to C₇-cycloalkyl, benzyl, phenethyl, phenyl, furylmethyl, pyridylmethyl or pyridylethyl,
it being possible for alkyl radicals to be optionally branched and/or substituted by up to 3 identical or different substituents from the group consisting of cyano, fluorine, chlorine, hydroxyl, C₁- to C₄-alkoxy and C₁- to C₄-alkoxy-carbonyl and
it being possible for benzyl, phenethyl, phenyl, furfurylmethyl, pyridylmethyl and pyridylethyl radicals to be optionally substituted by up to 3 identical or different radicals from the group consisting of cyano, chlorine, hydroxyl, C₁- to C₄-alkyl, C₁- to C₄-alkoxy, nitro and C₁- to C₄-alkoxycarbonyl,
R³ denotes hydrogen, fluorine, chlorine, C₁- to C₄-alkyl or C₁- to C₄-alkoxy, it being possible for alkyl and alkoxy radicals to be optionally substituted by up to 3 identical or different substituents from the group consisting of fluorine, chlorine and methoxy,
R⁴ denotes hydrogen, fluorine, chlorine, hydroxyl, amino, nitro, cyano, C₁- to C₄-alkyl, C₁- to C₄-alkoxy, C₁- to C₄-alkanoylamino, C₁- to C₄-alkanoyloxy, C₁- to C₄-alkanesulphonylamino, C₁-to C₄-alkanesulphonyloxy, C₁- to C₄-alkoxycarbonylamino, C₁- to C₄-alkoxycarbonyloxy, C₁- to C₄-dialkylaminocarbonylamino, C₁- to C₄-dialkylaminocarbonyloxy or C₁- to C₄-alkoxy-carbonyl,
it being possible for these radicals, apart from hydrogen, fluorine, chlorine, hydroxyl, amino, nitro and cyano, to be optionally substituted by up to 3 identical or different substituents from the group consisting of fluorine and chlorine and
R⁵ and R⁶ independently of one another in each case denote hydrogen, C₁- to C₈-alkyl, benzyl, phenethyl or phenyl,
it being possible for alkyl radicals to be optionally branched and/or substituted by up to 3 identical or different substituents from the group consisting of cyano, fluorine, chlorine, hydroxyl, C₁- to C₄-alkoxy, C₁- to C₄-alkoxy-carbonyl, C₁- to C₄-alkanoyloxy and C₁- to C₄-alkoxycarbonyloxy and
it being possible for benzyl, phenethyl and phenyl radicals to be optionally substituted by up to 3 identical or different substituents from the group consisting of chlorine, C₁- to C₄-alkyl and C₁- to C₄-alkoxy, or the group
NR⁵R⁶ together denotes pyrrolidino, piperidino, morpholino, piperazino, N-C₁- to C₄-alkyl-piperazino or trimethylpyrazolino.

3. Process for the preparation of pyrazole azo dyestuffs according to Claims 1 and 2, **characterized in that**, in formula (I),
R¹ denotes hydrogen, C₁- to C₄-alkanoyl, C₁- to C₄-alkanesulphonyl, benzoyl, benzenesulphonyl, C₁-to C₄-alkoxycarbonyl, C₁- to C₄-alkylaminocarbonyl or phenylaminocarbonyl,
it being possible for all these radicals, apart from hydrogen, to be optionally substituted by up to 3 identical or different substituents from the group consisting of cyano, fluorine, chlorine and methoxy,
R² is hydrogen, C₁- to C₄-alkyl, allyl, cyclopentyl, cyclohexyl, benzyl, phenethyl or phenyl,
it being possible for alkyl radicals to be optionally substituted by up to 3 identical or different substituents from the group consisting of cyano, fluorine, chlorine, hydroxyl, methoxy, ethoxy, methoxycarbonyl and ethoxycarbonyl and
it being possible for benzyl, phenethyl and phenyl radicals to be optionally substituted by up to 3 identical or different substituents from the group consisting of cyano, chlorine, hydroxyl, methyl, ethyl, methoxy, ethoxy, nitro, methoxycarbonyl and ethoxycarbonyl,
R³ denotes hydrogen, fluorine, chlorine, methyl or ethyl
it being possible for methyl and ethyl to be optionally substituted by up to 3 identical or different substituents from the group consisting of fluorine, chlorine and methoxy,
R⁴ denotes hydrogen, fluorine, chlorine, hydroxyl, amino, nitro, cyano, methyl, ethyl, methoxy, ethoxy, formylamino, acetylamino, propionylamino, acetoxy, propionyloxy, methanesulphonylamino, ethanesulphonylamino, methoxycarbonylamino, ethoxycarbonylamino, methoxycarbonyloxy, ethoxy-carbonyloxy, methoxycarbonyl or ethoxycarbonyl, it being possible for these radicals, apart from hydrogen, fluorine, chlorine, hydroxyl, amino, nitro, formylamino and cyano, to be optionally substituted by up to 3 identical or different substituents from the group consisting of fluorine and chlorine,
R⁵ and R⁶ independently of one another in each case denote hydrogen, C₁- to C₄-alkyl, benzyl, phenethyl or phenyl,
it being possible for alkyl radicals to be optionally substituted by up to 3 identical or different substituents from the group consisting of cyano, fluorine, chlorine, hydroxyl, methoxy, ethoxy, methoxycarbonyl, ethoxycarbonyl, acetoxy and propionyloxy and
it being possible for benzyl, phenethyl and phenyl radicals to be optionally substituted by up to 3 identical or different substituents from the group consisting of chlorine, methyl and methoxy, or the group
NR⁵R⁶ together denotes pyrrolidino, piperidino, morpholino, piperazino, N-methylpiperazino or trimethylpyrazolino.

4. Process for the preparation of pyrazole azo dyestuffs according to Claims 1 to 3, **characterized in that**, in formula (I),
R¹ denotes hydrogen, acetyl, propionyl, methanesulphonyl, ethanesulphonyl, methoxycarbonyl, ethoxycarbonyl or methylaminocarbonyl,
R² denotes methyl, ethyl, propyl, butyl, cyanoethyl, chloroethyl, hydroxyethyl, hydroxypropyl, methoxyethyl, ethoxyethyl, methoxycarbonylethyl, allyl, cyclohexyl, benzyl, phenethyl, phenyl, tolyl or chlorophenyl,
R³ denotes hydrogen, chlorine or methyl,
R⁴ denotes hydrogen, fluorine, chlorine, hydroxyl, amino, methyl, ethyl, trifluoromethyl, formylamino, acetylamino, trifluoroacetylamino, propionylamino, acetoxy, methanesulphonylamino, methoxycarbonylamino, ethoxycarbonylamino, methoxycarbonyl or ethoxycarbonyl and
R⁵ and R⁶ independently of one another in each case denote methyl, ethyl, propyl, butyl, chloroethyl, hydroxyethyl, cyanoethyl, methoxyethyl, methoxycarbonylethyl, acetoxyethyl, propionyloxyethyl, methoxycarbonyloxyethyl, ethoxycarbonyloxyethyl, benzyl, phenyl, tolyl or chlorophenyl.

5. Process for the preparation of pyrazole azo dyestuffs according to Claims 1 to 4, **characterized in that**, in formula (I),
R¹ denotes hydrogen, formyl, acetyl, trifluoroacetyl, propionyl, methanesulphonyl, ethanesulphonyl, methoxycarbonyl or ethoxycarbonyl,
R² denotes methyl, ethyl, propyl, cyanoethyl or benzyl,
R³ denotes hydrogen or methyl,
R⁴ denotes acetamino, propionylamino, methanesulphonylamino or methoxycarbonylamino and
R⁵ and R⁶ independently of one another in each case denote methyl, ethyl, propyl, cyanoethyl, methoxyethyl, methoxycarbonylethyl or acetoxyethyl.

## Revendications

1. Procédé pour la préparation de colorants azo de pyrazole de la formule ( I ) 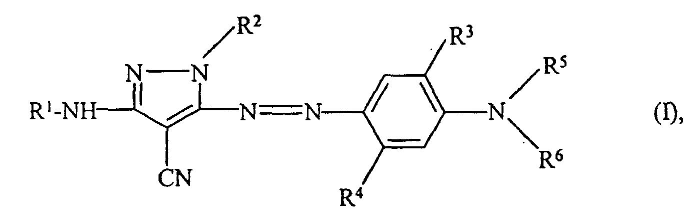 dans laquelle
R¹ représente l'atome d'hydrogène ou un reste acyle,
R² représente l'atome d'hydrogène, un groupe alkyle, alcényle, cycloalkyle, aralkyle, aryle ou un reste hétérocyclique éventuellement lié par l'intermédiaire d'un groupe alkylène,
R³ représente l'atome d'hydrogène, un atome d'halogène, un groupe alkyle ou alcoxy,
R⁴ représente l'atome d'hydrogène, un atome d'halogène, le groupe hydroxy, amino, nitro, cyano, un groupe alkyle, alcoxy, acylamino, acyloxy ou alcoxycarbonyle,
R⁵ et R⁶ représentent chacun indépendamment l'atome d'hydrogène, un groupe alkyle, aralkyle ou aryle ou
NR⁵R⁶ représente dans l'ensemble un reste hétérocyclique lié par l'intermédiaire d'un atome d'azote, hydrogéné et contenant éventuellement d'autres hétéroatomes,
**caractérisé en ce que** l'on fait réagir un colorant cationique de 1,3,4-thiadiazole de la formule ( II ) 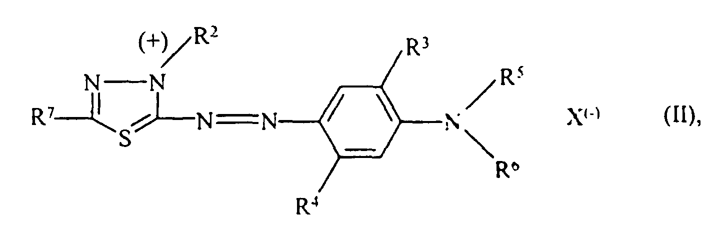 dans laquelle
R², R³, R⁴, R⁵ et R⁶ ont les significations indiquées ci-dessus,
R⁷ représente l'atome d'hydrogène, un groupe alkyle, cycloalkyle, aralkyle, aryle, un reste hétérocyclique éventuellement lié par l'intermédiaire d'un groupe alkylene, OR⁸, SR⁸ ou NR⁸R⁹,
R⁸ et R⁹ représentent indépendamment l'atome d'hydrogène, un groupe alkyle, alcényle, acyle, cycloalkyle, aralkyle, aryle ou un reste hétérocyclique éventuellement lié par l'intermédiaire d'un groupe alkylène ou
NR⁸R⁹ représente un reste hétérocyclique lié par l'intermédiaire d'un atome d'azote, complètement hydrogéné et contenant éventuellement d'autres hétéroatomes, et
X⁻ représente un anion,
avec du malodinitrile et en ce que, dans le cas où R¹ représente un reste acyle, on fait réagir le colorant azo de pyrazole de la formule (I) formé avec R¹ = l'atome d'hydrogène avec un agent d'acylation.

2. Procédé pour la préparation de colorants azo de pyrazole selon la revendication 1, **caractérisé en ce que** dans la formule ( I )
R¹ représente l'atome d'hydrogène, un groupe alcanoyle en C₁-C₈, alcanesulfonyle en C₁-C₈, le groupe benzoyle, benzènesulfonyle, un groupe alcoxycarbonyle en C₁-C₈, alkylaminocarbonyle en C₁-C₈ ou le groupe phénylaminocarbonyle,
tous ces restes à l'exception de l'atome d'hydrogène pouvant être éventuellement substitués avec jusqu'à 3 substituants identiques ou différents choisis parmi le groupe cyano, l'atome de fluor, de chlore, le groupe hydroxy et un groupe alcoxy en C₁-C₄,
R² représente l'atome d'hydrogène, un groupe alkyle en C₁-C₈, alcényle en C₂-C₄, cycloalkyle en C₄-C₇, le groupe benzyle, phénéthyle, phényle, furylinéthyle, pyridylméthyle ou pyridyléthyle,
les restes alkyle pouvant être éventuellement ramifiés et/ou substitués avec jusqu'à 3 substituants identiques ou différents choisis parmi le groupe cyano, l'atome de fluor, de chlore, le croupe hydroxy, un groupe alcoxy en C₁-C₄ et alcoxycarbonyle en C₁-C₄ et
les restes benzyle, phénéthyle, phényle, furfurylméthyle, pyridylméthyle et pyridyléthyle pouvant étre éventuellement substitués avec jusqu'à 3 substituants identiques ou différents choisis parmi le groupe cyano, l'atome de chlore, le groupe hydroxy, un groupe alkyle en C₁-C₄, alcoxy en C₁-C₄, le groupe nitro et un groupe alcoxycarbonyle en C₁-C₄,
R³ représente l'atome d'hydrogène, de fluor, de chlore, un groupe alkyle en C₁-C₄ ou alcoxy en C₁-C₄,
les restes alkyle et alcoxy pouvant être éventuellement substitués avec jusqu'à 3 substituants identiques ou différents choisis parmi l'atome de fluor, de chlore et le groupe méthoxy,
R⁴ représente l'atome d'hydrogène, de fluor, de chlore, le groupe hydroxy, amino, nitro, cyano, un groupe alkyle en C₁-C₄, alcoxy en C₁-C₄, alcanoylamino en C₁-C₄, alcanoyloxy en C₁-C₄, alcanesulfonylamino en C₁-C₄, alcanesulfonyloxy en C₁-C₄, alcoxycarbonylamino en C₁-C₄, alcoxycarbonyloxy en C₁-C₄, dialkylaminocarbonylamino en C₁-C₄, dialkylaminocarbonyloxy en C₁-C₄ ou alcoxycarbonyle en C₁-C₄,
ces restes à l'exception de l'atome d'hydrogène, de fluor, de chlore, du groupe hydroxy, amino, nitro et cyano pouvant être éventuellement substitués avec jusqu'à 3 substituants identiques ou différents choisis parmi l'atome de fluor et de chlore,
R⁵ et R⁶ représentent chacun indépendamment l'atome d'hydrogène, un groupe alkyle en C₁-C₈, le groupe benzyle, phénéthyle ou phényle,
les restes alkyle pouvant être éventuellement ramifiés et/ou substitués avec jusqu'à 3 substituants identiques ou différents choisis parmi le groupe cyano, l'atome de fluor, de chlore, le groupe hydroxy, un groupe alcoxy en C₁-C₄, alcoxycarbonyle en C₁-C₄, alcanoyloxy en C₁-C₄ et alcoxycarbonyloxy en C₁-C₄ et
les restes benzyle, phénéthyle, phényle pouvant être éventuellement substitués avec jusqu'à 3 substituants identiques ou différents choisis parmi l'atome de chlore, un groupe alkyle en C₁-C₄ et alcoxy en C₁-C₄, ou le groupe
NR⁵R⁶ représente dans l'ensemble le groupe pyrrolidino, pipéridino, morpholino, pipérazino, N-alkylpipérazino en C₁-C₄ ou triméthylpyrazolino.

3. Procédé pour la préparation de colorants azo de pyrazole selon les revendications 1 à 2, **caractérisé en ce que** dans la formule ( I )
R¹ représente l'atome d'hydrogène, un groupe alcanoyle en C₁-C₄, alcanesulfonyle en C₁-C₄, le groupe benzoyle, benzènesulfonyle, un groupe alcoxycarbonyle en C₁-C₄, alkylaminocarbonyle en C₁-C₄ ou le groupe phénylaminocarbonyle,
tous ces restes à l'exception de l'atome d'hydrogène pouvant être éventuellement substitués avec jusqu'à 3 substituants identiques ou différents choisis parmi le groupe cyano, l'atome de fluor, de chlore et le groupe méthoxy,
R² représente l'atome d'hydrogène, un groupe alkyle en C₁-C₄, allyle, le groupe cyclopentyle, cyclohexyle, benzyle, phénéthyle ou phényle,
les restes alkyle pouvant être éventuellement substitués avec jusqu'à 3 substituants identiques ou différents choisis parmi le groupe cyano, l'atome de fluor, de chlore, le groupe hydroxy, méthoxy, éthoxy, méthoxycarbonyle et éthoxycarbonyle et
les restes benzyle, phénéthyle et phényle pouvant être éventuellement substitués avec jusqu'à 3 substituants identiques ou différents choisis parmi le groupe cyano, l'atome de chlore, le groupe hydroxy, méthyle, éthyle, méthoxy, éthoxy, nitro, méthoxycarbonyle et éthoxycarbonyle,
R³ représente l'atome d'hydrogène, de fluor, de chlore, le groupe méthyle ou éthyle,
les restes méthyle et éthyle pouvant être éventuellement substitués avec jusqu'à 3 substituants identiques ou différents choisis parmi l'atome de fluor, de chlore et le groupe méthoxy,
R⁴ représente l'atome d'hydrogène, de fluor, de chlore, le groupe hydroxy, amino, nitro, cyano, méthyle, éthyle, méthoxy, éthoxy, formylamino, acétylamino, propionylamino, acétoxy, propionyloxy, méthanesulfonylamino, éthanesulfonylamino, méthoxycarbonylamino, éthoxycarbonylamino, méthoxycarbonyloxy, éthoxycarbonyloxy, méthoxycarbonyle, éthoxycarbonyle,
ces restes à l'exception de l'atome d'hydrogène, de fluor, de chlore, du groupe hydroxy, amino, nitro, formylamino et cyano pouvant être éventuellement substitués avec jusqu'à 3 substituants identiques ou différents choisis parmi l'atome de fluor et de chlore,
R⁵ et R⁶ représentent chacun indépendamment l'atome d'hydrogène, un groupe alkyle en C₁-C₄, le groupe benzyle, phénéthyle ou phényle,
les restes alkyle pouvant être eventuellement substitués avec jusqu'à 3 substituants identiques ou différents choisis parmi le groupe cyano, l'atome de fluor, de chlore, le groupe hydroxy, méthoxy, éthoxy, méthoxycarbonyle, éthoxycarbonyle, acétoxy et propionyloxy et
les restes benzyle, phénéthyle et phényle pouvant être éventuellement substitués avec jusqu'à 3 substituants identiques ou différents choisis parmi l'atonie de chlore, le groupe méthyle et méthoxy ou le groupe
NR⁵R⁶ représente dans l'ensemble le groupe pyrrolidino, pipéridino, morpholino, pipérazino, N-méthylpipérazino ou triméthylpyrazolino,

4. Procédé pour la préparation de colorants azo de pyrazole selon les revendications 1 à 3, **caractérisé en ce que** dans la formule ( I )
R¹ représente l'atome d'hydrogène, le groupe acétyle, propionyle, méthanesulfonyle, éthanesulfonyle , méthoxycarbonyle, éthoxycarbonyle ou méthylaminocarbonyle,
R² représente le groupe méthyle, éthyle, propyle, butyle, cyanoéthyle, chloroéthyle, hydroxyéthyle, hydroxypropyle, méthoxyéthyle, éthoxyéthyle, méthoxycarbonyléthyle, allyle, cyclohexyle, benzyle, phénéthyle, phényle, tolyle ou chorophényle,
R³ représente l'atome d'hydrogène, de chlore ou le groupe méthyle,
R⁴ représente l'atome d'hydrogène, de fluor, de chlore, le groupe hydroxy, amino, méthyle, éthyle, trifluorométhyle, formylamino, acétylamino, trifluoroacétylamino, propionylamino, acétoxy, méthanesulfonylamino, méthoxycarbonylamino, éthoxycarbonylamino, méthoxycarbonyle ou éthoxycarbonyle et
R⁵ et R⁶ représentent chacun indépendamment le groupe méthyle, éthyle, propyle, butyle, chloroéthyle, hydroxyéthyle, cyanoéthyle, méthoxyéthyle, méthoxycarbonyléthyle, acétoxyéthyle, propionyloxyéthyle, méthoxycarbonyloxyéthyle, éthoxycarbonyloxyéthyle, benzyle, phényle, tolyle ou chlorophényle.

5. Procédé pour la préparation de colorants azo de pyrazole selon les revendications 1 à 4, **caractérisé en ce que** dans la formule ( I )
R¹ représente l'atome d'hydrogène, le groupe acétyle, trifluoroacétyle, propionyle, méthanesulfonyle, éthanesulfonyle, méthoxycarbonyle ou éthoxycarbonyle,
R² représente le groupe méthyle, éthyle, propyle, cyanoéthyle ou benzyle,
R³ représente l'atome d'hydrogène ou le groupe méthyle,
R⁴ représente le groupe acétylamino, propionylamino, méthanesulfonylamino ou méthoxycarbonylamino et
R⁵ et R⁶ représentent chacun indépendamment le groupe méthyle, éthyle, propyle, cyanoéthyle, méthoxyéthyle, méthoxycarbonyléthyle ou acétoxyéthyle.
